# EUROPÄISCHE PATENTSCHRIFT

(11) **EP 1 417 430 B1**
(45) Veröffentlichungstag und Bekanntmachung des Hinweises auf die Patenterteilung: **29.03.2006**
(21) Anmeldenummer: 02751018.9
(22) Anmeldetag: 12.06.2002
(51) Int. Cl.: F16K 7/12, F16K 31/122

(54) **MEMBRANVENTIL**
MEMBRANE VALVE
VANNE A MEMBRANE

(30) Priorität: 14.08.2001 DE 10139815
(43) Veröffentlichungstag der Anmeldung: 12.05.2004
(73) Patentinhaber: SED Flow Control GmbH, 74906 Bad Rappenau (DE)
(72) Erfinder: MALL, Valentin, 74831 Gundelsheim (DE); HILLER, Martin, 74906 Bad Rappenau (DE)
(74) Vertreter: Bockhorni, Josef
(86) Internationale Anmeldenummer: PCT/EP2002/006474
(87) Internationale Veröffentlichungsnummer: WO 2003/016760

(56) Entgegenhaltungen:
- EP-A- 0 607 621
- EP-A- 0 897 076
- EP-A- 1 114 957
- DE-A- 4 408 671
- US-A- 4 903 939
- US-A- 5 755 428
- US-B1- 6 189 861
- PATENT ABSTRACTS OF JAPAN Bd. 015, Nr. 032 (M-1073), 25. Januar 1991 (1991-01-25) & JP 02 271168 A (BENKON CORP.), 6. November 1990 (1990-11-06)

## Beschreibung

Die Erfindung betrifft ein Membranventil, insbesondere zum Einsatz bei der Beförderung von flüssigen und gasförmigen Medien in der Pharmaindustrie und der Biotechnik.

Bei der Konzeption und Verwendung von Leitungsarmaturen, wie Rohren, Ventilen und dergleichen im Bereich der Pharmaindustrie und der Biotechnik werden gerade unter dem Gesichtspunkt der Reinheit der Armaturen hohe Anforderungen gestellt. Insbesondere sollten die Stoffe, mit denen das durch ein Rohrsystem geleitete Medium in Kontakt tritt, nicht zu dessen Verschmutzung beitragen. Hieraus ergeben sich hinsichtlich der Beschaffenheit von verwendeten Ventilen, insbesondere Membranventilen, besondere Anforderungen. So müssen die Ventile einfach und effektiv gereinigt werden können. Meistens wird aus diesen Gründen das Rohrsystem, beziehungsweise werden einzelne Produktleitungen, mit Reinsidampf regelmäßig sterilisiert, zum Teil wird das komplette System einem Autoklaven zugeführt, um es zu reinigen. Eine solche, regelmäßig erforderliche Reinigung ist mit einem hohen Aufwand verbunden. So müssen die Systeme so beschaffen sein, dass keine die Reinigung störenden Teile vorhanden sind, was oftmals durch den komplizierten Aufbau von Armaturen nicht ermöglicht wird.

Ein weiteres Problem besteht in diesem Zusammenhang darin, daß aufgrund des komplexen Aufbaus, insbesondere von Ventilen, die Wartung schwierig ist, da Produktleitungen sich meistens nur schwer von den übrigen Bestandteilen (Antriebe der Ventile, Steuerluftzufuhr, seitlich außen liegende Schlauch- und Kabelverbindungen und dergleichen) trennen lassen. Überdies verfügen bekannte Ventile aufgrund dieser Bestandteile über eine verhältnismäßig große räumliche Ausdehnung, so dass ihr Einbau mit erheblichem Platzbedarf verbunden ist.

Gattungsgemäße Membranventile, die die oben beschriebenen Nachteile teilweise lösen, sind in den Druckschriften US-A-5 755 428, US-B-6 189 861 und JP-A-2271168 beschrieben. Nachteilig an diesen Membranventilen ist es, dass diese bei Anschluss einer Steuerluft führenden Leitung relativ hoch bauen, zumal wenn noch Vorsteuerventile angeschlossen werden.

Aufgabe der vorliegenden Erfindung ist es daher, ein Membranventil zu schaffen, welches einer einfachen Wartung und Reinigung zugänglich ist und darüber hinaus die oben genannten Nachteile nicht aufweist, insbesondere nicht bei Anschluss einer Steuerluft führenden Leitung hoch baut.

Diese Aufgabe wird gemäß der vorliegenden Erfindung gelöst durch ein Membranventil gemäß Anspruch 1. Vorteilhafte Weiterbildungen dieses erfindungsgemäßen Membranventils sind Gegenstand der abhängigen Unteransprüche.

Das erfindungsgemäße Membranventil umfasst einen Ventilkörper zum Transportieren eines strömenden Mediums und einen Antriebsteil zum Steuern des Ventils. Der Ventilkörper weist erste und zweite durch die Membran trennbare Kammern auf, wobei der Antriebsteil in einen Kolbenraum und einen hiervon getrennten Antriebsunterteil aufgeteilt ist. Der Antriebsteil weist eine Spindel auf, die am einen Ende mit einem Druckstück verbunden ist, wobei das Druckstück mit einer Membran zum Öffnen und Schließen des Ventils verbunden ist. Des weiteren beinhaltet der Antriebsteil einen Spindelaufsatz, der mit dem anderen Ende der Spindel verbunden ist und einen Kolben, welcher von der Spindel oder/und dem Spindelaufsatz gehalten wird und integral mit der Spindel bewegbar ist. Ferner ist im Antriebsteil wenigstens eine Rückholfeder vorgesehen, mit der der Kolben so vorgespannt ist, dass das Druckstück über Kolben und Spindel gegen die Membran drückt und dadurch die ersten und zweiten Kammern voneinander getrennt sind und sich das Ventil in einem geschlossenen Zustand befindet. Zudem ist im Antriebsteil eine Einlassöffnung zum Einleiten von Luft für das pneumatische Anheben des Kolbens gegen die Spannrichtung der Feder vorgesehen. Hierbei weisen die Spindel und der Spindelaufsatz einen Hohlraum auf, welcher an einem Ende in Strömungsverbindung mit der Einlassöffnung und am anderen Ende in Strömungsverbindung mit dem Raumbereich unterhalb des Kolbens steht.

Durch diesen Ventilaufbau kann die Steuerluftzuführung zum Anheben des Kolbens über die Hohlspindel erfolgen. Die Steuerluft tritt unterhalb des Antriebskolbens aus der Spindel aus und drückt den Kolben so nach oben. Hierdurch wird es ermöglicht, die Steuerluftzuführung weit entfernt von der Produktleitung auszubilden, so dass die entsprechenden Anschlüsse für die Steuerluft sehr komfortabel angebracht und zur Wartung oder Reinigung entfernt werden können, wodurch ein einfaches Handling des Ventils möglich wird. Zudem gelangt die Steuerluft durch das Innere des Ventils zum Raum unterhalb des Kolbens, so dass keine äußeren Zuführungsleitungen notwendig sind, so dass insgesamt der äußere Aufbau des Ventils vereinfacht und damit der Platzbedarf reduziert wird. Zudem wird das Reinigen des Ventils durch das Vereinfachen des Aufbaus erleichtert.

Die Einlassöffnung zum Anschließen der Steuerluft ist seitlich am oberen Abschnitt des Antriebsteils vorgesehen, so dass die Längsachse der Einlassöffnung senkrecht zur Längsachse der Spindel verläuft. In Strömungsverbindung zwischen der Einlassöffnung und dem Hohlraum ist ein Faltenbalg vorgesehen, der die Bewegung der Spindel ausgleicht, so dass die Luftzufuhrleitung zur Spindel flexibel gestaltet ist und mit dem Heben und Senken des Kolbens mitgeht.

In dem Membranventil kann nach einer vorteilhaften Ausführungsform ein Vorsteuerventil vorgesehen sein. Das Vorsteuerventil, vorzugsweise ein Magnetventil, ist zum Zuführen von Luft am Antriebsteil in Strömungsverbindung mit der Einlassöffnung vorgesehen. Es steuert das Öffnen und Schließen des Membranventils und wird über eine Steuerelektronik oder dergleichen geregelt. Durch Integrieren eines Vorsteuerventils wird der Anforderung, Sauberkeit, Verschmutzungsunempfindlichkeit, Reinigbarkeit und Kompaktheit in hohem Maße entsprochen.

Das Membranventil weist nach einer bevorzugten Ausführungsform im Antriebsteil erste und zweite Auslassöffnungen für die Entweichung von Luft aus dem Kolbenraum und dem Antriebsunterteil auf. Hierdurch kann der durch Bewegen des Kolbens und des Druckstücks entstehender Druck im Innern des Ventils abgeleitet werden.

Nach einer weiteren, vorteilhaften Ausführungsform der Erfindung ist am Membranventil eine Stellungsanzeige vorgesehen, die den Öffnungszustand des Ventils anzeigt, so dass der Zustand des Ventils von außen jederzeit erkennbar ist.

Ein weiterer Vorteil bei diesen Membranventilen ergibt sich beim Aufbau von Systemkomponenten in denen das Vorsteuerventil integriert ist. Dies sind z.B. Stellungsanzeigen elektrisch/optisch, ASI-Bus-Aufbauten usw.

In diesem Fall erfolgt die Steuerluftzuführung in die Systemkomponente über das Vorsteuerventil in den Antrieb. Der Antriebsdeckel ist in diesem Fall mit einer Ringnut versehen, die über eine Querbohrung die Luft in über die verschiedenst angedeuteten Möglichkeiten in die Hohlspindel führt. Der Vorteil ist, dass dazu keine externen Leitungen und Verbindungen erforderlich sind.

Durch die Verlagerung der Luftzuführung ergeben sich auch wesentliche Vorteile bei der Zugänglichkeit der Produktleitung. Dies ist bei Auswechslung bei der Mediumsmembrane, die bei dieser Anwendung oft einer zyklischen Auswechslung unterliegen unabhängig vom Zustand. Des weiteren ergibt sich ein wesentlicher Vorteil sobald die Produktleitung isoliert werden muss.

Je nach Fördermedium werden üblicherweise Rohrleitungssysteme, Armaturen und dergleichen mit unterschiedlichen Betriebsdrücken gefahren. Um die Dichtheit der Armaturen zu gewährleisten, kann es vorkommen, dass beim Wechsel auf ein anderes Fördermedium die Armaturen ausgewechselt werden müssen. Um dem vorzubeugen, ist das erfindungsgemäße Membranventil nach einer weiteren vorteilhaften Weiterbildung mit mehreren Federn mit jeweils unterschiedlicher Spannkraft vorgesehen, die entsprechend an unterschiedliche Betriebsdrücke des Ventils angepasst sind. Hierdurch kann das erfindungsgemäße Ventil ohne Aus- oder Umbau in einem bestehenden Rohrleitungssystem verwendet werden und erlaubt zudem ohne Anpassung den Einsatz bei unterschiedlichen Betriebsdrücken, so dass es eine Vielzahl von Anwendungen ermöglicht.

Die Erfindung und ihre vorteilhaften Ausführungsfbrmen werden nun anhand der Zeichnungen schematisch näher erläutert. Dabei zeigen:
Fig. 1 eine Ausführungsform der vorliegenden Erfindung in Querschnittansicht, und
Fig. 2 ein Beispiel eines Membranventils in Querschnittansicht zur Erleichterung des Verständnisses der vorliegenden Erfindung.

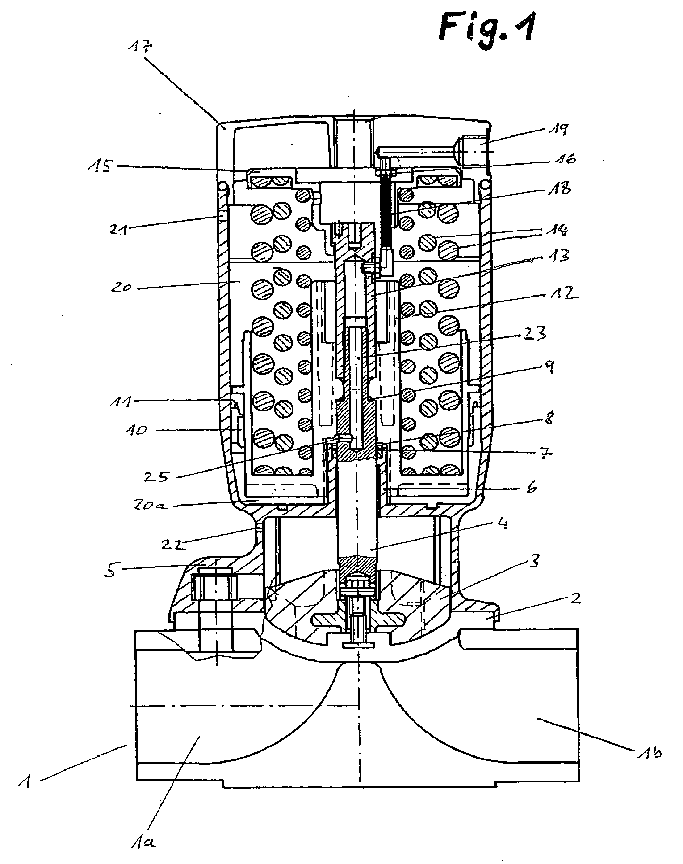

In Fig. 1 ist eine Ausführungsform der Erfindung in Querschnittansicht dargestellt. Im unteren Teil befindet sich ein Ventilkörper 1, der eine erste Kammer 1a und eine zweite Kammer 1b aufweist, durch die das Fördermedium geleitet wird. Der Weg von der ersten Kammer 1a zur zweiten Kammer 1b kann durch eine Membran 2 verschlossen werden, die aus einem Elastomer, PTE oder dergleichen bestehen kann (in der Zeichnung ist der geschlossene Zustand dargestellt).

Auf der dem Ventilkörper 1 abgewandten Seite der Membran 2 ist ein Druckkörper 3 befestigt, der aus Edelstahl oder Kunststoff bestehen kann. Der Druckkörper 3 befindet sich in einer Druckkörperkammer 24, die von einem darüber liegenden Kolbenraum 20, 20a abgetrennt ist, so dass zwischen Druckkörperkammer 24 und Kolbenraum 20, 20a kein Luftaustausch stattfinden kann. Der Druckkörper 3 ist wiederum mit dem unteren Ende einer Spindel 4 verbunden, die vorzugsweise aus Edelstahl besteht Die Spindel ist beweglich in einer Gleitbuchse 6 gelagert, die aus unterschiedlichen Werkstoffen mit zusätzlichen Gleitbeschichtungen wie PTFE/Kohle bestehen kann. Somit kann der Druckkörper 3 über die Spindel 4 auf und ab bewegt werden, wodurch die Membran 2 angehoben und abgesenkt und das Membranventil geöffnet und geschlossen wird. Zum Entweichen der Luft ist in der Wand der Druckkörperkammer 24 eine Auslassöffnung 22 vorgesehen.

Die Spindel 4 ist am oberen Ende im Kolbenraum 20, 20a mit einem Spindelaufsatz 13 aus Edelstahl oder dergleichen vorzugsweise durch Verschrauben verbunden. Im Bereich der Verbindung von Spindel 4 und Spindelaufsatz 13 ist ein Kolben 12 befestigt, so dass er integral mit der Spindel 4 bewegt werden kann. Der Kolben 12 liegt auf einer mit der Spindel 4 verbundenen Sicherungsscheibe 8 aus Edelstahl oder dergleichen und einem darunter liegenden Abdichtring 7 aus Kunststoff (NBR) auf. Im Verbindungsbereich zwischen Spindel 4 und Spindelaufsatz 13 ist zur Abdichtung ein O-Ring aus Kunststoff vorgesehen, so dass durch den inneren Bereich des Kolbens 12 keine Luft in die Druckköiperkammer 24 entweichen kann. An seiner Außenseite ist der Kolben 12 mit einem Haltering 10 aus Kunststoff (PP) und einem Kolbennutring aus NBR oder dergleichen vorgesehen, so dass kein Luftaustausch zwischen Kolbenraum 20 und dem Raum unter dem Kolben 20a stattfinden kann. Der Kolben 12 ist mit wenigstens einer Feder 14 gegen eine als Widerlager dienende Abfangplatte 15 vorgespannt, so dass der Kolben zusammen mit der Spindel 4 und dem Druckkörper nach unten gedrückt wird, so dass die Membran 2 den Förderweg zwischen erster und zweiter Kammer 1a, 1b verschließt.

In der Spindel 4 und im Spindelaufsatz 13 ist ein Hohlraum 23 ausgebildet. Am oberen Ende des Hohlraums ist eine Öffnung über die von außen über eine Einlassöffnung 19 Steuerluft in den Hohlraum 23 gelangen kann. Am unteren Ende des Hohlraums 23 ist eine Auslassöffnung 25 vorgesehen, durch die die Steuerluft in den Raum unterhalb des Kolbens 20a gelangt, so dass der Kolben 12 durch Einlassen von Luft durch die Einlassöffnung 19 gegen die Vorspannung der Feder 14 angehoben werden kann. Die Einlassöffnung 19 kann mit einem Gewinde zum Anschrauben eines Anschlussstücks für die Druckluftleitung ausgestattet sein. Zwischen Einlassöffnung 19 und dem Hohlraum 23 ist eine flexible Verbindung 16 durch einen Faltenbalg 18 vorgesehen, der die Auf- und Abbewegung der Spindel 4 und des Spindelaufsatzes 13 kompensiert, und eine flexible Strömungsverbindung 16 zwischen Einlassöffnung 19 und Hohlraum 23 schafft.

Im Bereich der flexiblen Strömungsverbindung kann zusätzlich noch ein Vorsteuerventil (nicht gezeigt) in den Luftweg integriert sein. Dabei handelt es sich vorzugsweise um ein Magnetventil, welches über eine Steuerelektronik oder dergleichen das Öffnen/Schließen des Membranventils steuert, indem es eine an der Einlassöffnung 19 anliegende Druckluft durchlässt oder entsprechend blockiert. Eine Integration eines Vorsteuerventils ermöglicht eine besonders kompakte Bauweise des erfindungsgemäßen Ventils. Dasselbe gilt für den Aufbau von Systemkomponenten mit Vorsteuerventil, da in diesen Fällen auf die außenliegenden Zuführungsleitungen verzichtet werden kann.

Der Betrieb des Membranventils erfolgt nun folgendermaßen. Wird Druckluft in die Einlassöffnung 19 eingeleitet, gelangt diese über den Faltenbalg 18 in den Hohlraum 23 von Spindel 4 und Spindelaufsatz 13. Am unteren Ende des Hohlraums 23 tritt die Druckluft über die Öffnung 25 (es können auch mehrere Öffnungen 25 vorgesehen sein) in den Raum unterhalb des Kolbens 20a aus. Die sich in dem Raum 20a ansammelnde Luft drückt den Kolben 12 gegen die Spannung der Feder 14 nach oben. Hierdurch werden Spindel 4, Spindelaufsatz 13, Druckkörper 3 und Membran 2 angehoben, und der Faltenbalg 18 wird zusammengedrückt. Das Membranventil öffnet sich, und das Fördergut kann im Ventilkörper 1 von der ersten Kammer 1a in die zweite Kammer befördert werden. Wird die Druckluft ausgeschaltet, so entweicht die im Raum unter dem Kolben 20a gesammelte Luft über den Hohlraum 23, und der Kolben 12 wird zusammen mit der Spindel 4, dem Spindelaufsatz 13 dem Druckkörper 3 und der Membran 2 durch die Feder 14 nach unten gedrückt, der Faltenbalg 18 wird entspannt und das Ventil schließt sich.

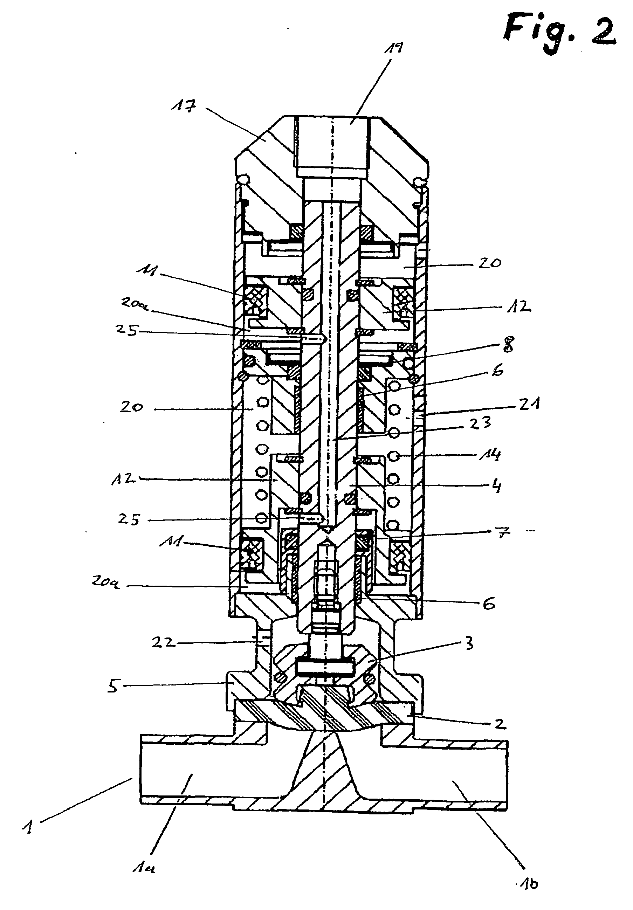

Ein Beispiel, das das Verständnis der Erfindung erleichtert ist in Fig. 2 in Querschnittansicht am Beispiel eines Doppelkolbenventils dargestellt. Die Bezugszeichen in Fig. 2 bezeichnen dieselben Bauteile und Einrichtungen wie in Fig. 1. Hier befindet sich die Einlassöffnung 19 für die Druckluft nicht seitlich am Antriebsteil, sondern ist koaxial mit der Längsachse der Hohlspindel 4 in der Antriebsabdeckung 17 ausgebildet. Hierdurch wird die Luft direkt in den Hohlraum 23 der Spindel 4 eingeleitet. Die Einlassöffnung ist mit einem Gewinde versehen, auf das eine Kupplung zu einer Zuführleitung (nicht gezeigt) aufgeschraubt werden kann. Auch kann hier, wie auch im Beispiel aus Fig.1 ein Vorsteuerventil entweder außen angeflanscht oder im Antriebsteil zwischen Einlassöffnung 19 und Spindelöffnung vorgesehen sein.

Auch das in Fig. 2 gezeigte Membranventil eignet sich durch die kompakte Bauweise zur parallelen oder Reihenanordnung. Die kompakte Bauweise ist nur über den Doppelkolben zu erreichen, da die notwendigen Federkräfte durch einen einfachen Kolben einen zu hohen Steuerdruck erfordern. Auch können Systemkomponenten mit Vorsteuerventil zur Funktionskontrolle und /oder Ansteuerung aufmontiert werden. Zu alledem sind lediglich oben auf den Ventilen oder an der Systemkomponente Leitungsanschlüsse anzubringen, andere Leitungen an den Ventilen können aufgrund der Luftführung durch die hohle Spindel 4 eingespart werden. Dies erleichtert zum einen die Zugänglichkeit erfindungsgemäßer Ventile bei ihrer Wartung, zum anderen sind die Ventile verschmutzungsunempfindlich, einfach zu reinigen (selbstreinigend) und bieten somit optimale Voraussetzungen für verbesserte Prozesse in ihrer Anwendung.

## Patentansprüche

1. Membranventil mit
einem Ventilkörper (1) zum Transportieren eines strömenden Mediums und
einem Antriebsteil (5, 17) zum Steuern des Ventils,
wobei der Antriebsteil (5, 17) in einen Kolbenraum (20) und einen hiervon getrennten Antriebsunterteil (5) aufgeteilt ist und aufweist:
eine Spindel (4), die am einen Ende mit einem Druckstück (3) verbunden ist,
einen Spindelaufsatz (13) der mit dem anderen Ende der Spindel (4) verbunden ist, einen Kolben (12), welcher von der Spindel (4) oder/und dem Spindelaufsatz (13) gehalten wird und integral mit der Spindel (4) bewegbar ist, wenigstens eine Rückstellfeder (14), und
eine Einlassöffnung (19) zum Einleiten von Luft für das pneumatische Anheben des Kolbens (12) gegen die Spannrichtung der Feder (14),
wobei die Spindel (4) und der Spindelaufsatz (13) einen Hohlraum aufweisen, welcher an einem Ende in Strömungsverbindung mit der Einlassöffnung (19) und am anderen Ende in Strömungsverbindung mit dem Raumbereich unterhalb des Kolbens (20a) steht,
und wobei der Ventilkörper (1) erste und zweite durch eine Membran trennbare Kammern (1a, 1b) aufweist, wobei das Druckstück (3) mit der Membran (2) zum Öffnen und Schließen des Ventils verbunden ist, und der Kolben (12) durch die Rückstellfeder so vorgespannt ist, dass das Druckstück (3) über Kolben (12) und Spindel (4) gegen die Membran (2) drückt und **dadurch** die ersten und zweiten Kammern (1a, 1b) voneinander getrennt sind und sich das Ventil in einem geschlossenen Zustand befindet,
**dadurch gekennzeichnet, dass**
die Längsachse der Einlassöffnung (19) senkrecht zur Längsachse der Spindel (4) verläuft und die Strömungsverbindung zwischen der Einlassöffnung (19) und dem Hohlraum einen Faltenbalg aufweist.

2. Membranventil nach einem der vorherigen Ansprüche, **dadurch gekennzeichnet, dass** zum Zuführen von Luft am Antriebsteil (17) in Strömungsverbindung mit der Einlassöffnung (19) ein Vorsteuerventil vorgesehen ist.

3. Membranventil nach Anspruch 2, **dadurch gekennzeichnet, dass** das Vorsteuerventil ein Magnetventil ist.

4. Membranventil nach einem der vorherigen Ansprüche, **dadurch gekennzeichnet, dass** im Antriebsteil (5, 17) erste und zweite Auslassöffnungen (21, 22) für die Entweichung von Luft aus dem Kolbenraum (20) und dem Antriebsunterteil (5) vorgesehen sind.

5. Membranventil nach einem der vorherigen Anspruche, **dadurch gekennzeichnet, dass** es eine Stellungsanzeige aufweist, die den Öffnungszustand des Ventils anzeigt.

6. Membranventil nach einem der vorherigen Ansprüche, **dadurch gekennzeichnet, dass** mehrere Federn (14) mit jeweils unterschiedlicher Spannkraft vorgesehen sind, die entsprechend an unterschiedliche Betriebdrücke des Ventils angepasst sind.

## Claims

1. Diaphragm valve having
a valve body (1) for transporting a flowable medium and
a drive portion (5, 17) for controlling the valve,
the drive portion (5, 17) being divided into a piston space (20) and a lower drive portion (5) which is separated therefrom, and having:
a spindle (4) which is connected at one end to a pressure piece (3),
a spindle cap (13) which is connected to the other end of the spindle (4), a piston (12) which is held by the spindle (4) or/and the spindle cap (13) and is movable integrally with the spindle (4), at least one return spring (14) and
an inlet opening (19) for introducing air for the pneumatic lifting of the piston (12) counter to the resilience direction of the spring (14),
the spindle (4) and the spindle cap (13) having a hollow space which is, at one end, flowingly connected to the inlet opening (19) and, at the other end, flowingly connected to the spatial region below the piston (20a),
and the valve body (1) having first and second chambers (1a, 1b), which can be separated by a diaphragm, the pressure piece (3) being connected to the diaphragm (2) in order to open and close the valve, and the piston (12) being biased by the return spring in such a manner that the pressure piece (3) presses against the diaphragm (2) via the piston (12) and spindle (4) and the first and second chambers (1a, 1b) are thereby separated from each other and the valve is in a closed state,
**characterised in that**
the longitudinal axis of the inlet opening (19) extends perpendicularly to the longitudinal axis of the spindle (4) and the flow connection between the inlet opening (19) and the hollow space is provided with a bellows.

2. Diaphragm valve according to claim 1, **characterised in that** an advance control valve is provided on the drive portion (17) in flow-connection with the inlet opening (19) in order to supply air.

3. Diaphragm valve according to claim 2, **characterised in that** the advance control valve is a solenoid valve.

4. Diaphragm valve according to any one of the preceding claims, **characterised in that** first and second outlet openings (21, 22) are provided in the drive portion (5, 17) for discharging air out of the piston space (20) and the lower drive portion (5).

5. Diaphragm valve according to any one of the preceding claims, **characterised in that** it has a position display which displays the opening state of the valve.

6. Diaphragm valve according to any one of the preceding claims, **characterised in that** there are provided a plurality of springs (14) which each have a different resilient force and which are adapted accordingly to different operating pressures of the valve.

## Revendications

1. Soupape à membrane comprenant :
un corps de soupape (1), pour transporter un fluide en écoulement, et
une partie d'entraînement (5,17), pour la commande de la soupape,
où la partie d'entraînement (5,17) est subdivisée en une enceinte de piston (20) et une partie inférieure d'entraînement (5), séparée de celle-ci et présente :
une branche (4), reliée, à une extrémité, à une pièce de pression (3),
une garniture de broche (13), reliée à l'autre extrémité de la broche (4), un piston (12) maintenu par la broche (4) et/ou la garniture de broche (13) et déplaçable d'une seule pièce avec la broche (4), au moins un ressort de rappel (14), et
une ouverture d'admission (19), pour introduire de l'air pour la levée pneumatique du piston (12) dans le sens inverse du sens de serrage du ressort (14),
la broche (4) et la garniture de broche (13) présentant un espace creux, qui, à une extrémité, est en liaison d'écoulement avec l'ouverture d'admission (19) et, à l'autre extrémité, est en liaison d'écoulement avec la zone d'espace située au-dessous du piston (20a),
et le corps de soupape (1) présente des première et deuxième chambres (1a,1b) séparables par une membrane, la pièce de pressage (3) étant reliée à la membrane (2) pour ouvrir et fermer la soupape, et le piston (12) est ainsi précontraint par le ressort de rappel, de manière que la pièce de pression (3) presse, par l'intermédiaire du piston (12) et de la broche (4), contre la membrane (2) et, de ce fait, sépare l'une de l'autre les première et deuxième chambres (1a,1b) et faisant que la soupape se trouve en un état fermé,
**caractérisée en ce que**,
l'axe longitudinal de l'ouverture d'admission (19) s'étend perpendiculairement à l'axe longitudinal de la broche (4) et la liaison d'écoulement, entre l'ouverture d'admission (19) et l'espace creux, présente un soufflet.

2. Soupape à membrane selon l'une des revendications précédentes, **caractérisée en ce que** pour amener de l'air à la partie d'entraînement (17) est prévue une soupape de pilotage, placée en liaison d'écoulement avec l'ouverture d'entrée (19).

3. Soupape à membrane selon la revendication 2, **caractérisée en ce que** la soupape de pilotage est une soupape magnétique.

4. Soupape à membrane selon l'une des revendications précédentes, **caractérisée en ce que** dans la partie d'entraînement (5,17) sont prévues des première et deuxième ouvertures d'échappement (21,22), pour l'échappement de l'air hors de l'enceinte à piston (20) et de la partie inférieure d'entraînement (5).

5. Soupape à membrane selon l'une des revendications précédentes, **caractérisée en ce qu'**elle présente un affichage de position, affichant l'état d'ouverture de la soupape.

6. Soupape à membrane selon l'une des revendications précédentes, **caractérisée en ce que** plusieurs ressorts (14), ayant chacun une force de serrage différente, sont prévus, adaptés de manière correspondante à différentes pressions de fonctionnement de la soupape.
